# FASCICULE DE BREVET EUROPEEN

(11) **EP 1 158 829 B1**
(45) Date de publication et mention de la délivrance du brevet: **20.07.2011**
(21) Numéro de dépôt: 01401328.8
(22) Date de dépôt: 21.05.2001
(51) Int. Cl.: H04W 36/30

(54) **Procédé de re-connexion à un réseau d'un terminal de radiocommunication et terminal correspondant**
Verfahren zur Wiederverbindung eines Funkkommunikationsendgeräts mit einem Netzwerk und entsprechendes Endgerät
Method for reconnection of a radiocommunication terminal to a network and corresponding terminal

(30) Priorité: 25.05.2000 FR 0006687
(43) Date de publication de la demande: 28.11.2001
(73) Titulaire: Alcatel Lucent, 75008 Paris (FR)
(72) Inventeur: Attimont, Luc, 78100 Saint Germain en Laye (FR); Bodin, Jannick, 92380 Garches (FR)
(74) Mandataire: Korakis-Ménager, Sophie

(56) Documents cités:
- EP-A- 0 840 532
- US-A- 5 701 585

## Description

La présente invention concerne un procédé de re-connexion à un réseau d'un terminal de radiocommunication apte à accroître l'autonomie du dit terminal et à réduire son temps d'éveil lorsqu'un signal est de nouveau disponible, ainsi que le terminal correspondant.

Les terminaux de radiocommunication tels que les téléphones cellulaires, fonctionnant selon les normes GSM ou DECT par exemple, doivent, pour recevoir et émettre des données (vocales ou non), se trouver dans une zone couverte par une station de base émettant un signal, comme le décrivent notamment les documents US A 5701585 et EP A 0840 532.

Chaque émetteur délimite une certaine zone géographique appelée cellule à l'intérieur de laquelle la réception des données est satisfaisante. La densité de répartition des cellules, et donc des stations émettrices, dépend de leur situation géographique.

En effet, une zone urbaine ou un axe routier fréquenté possède une couverture relativement dense, sauf dans des endroits confinés tels que les parkings ou des salles (cinémas, spectacles...) où la réception est quasiment impossible.

Une région montagneuse ou peu fréquentée possède quant à elle moins de stations, donc plus éloignées, et se trouve de fait moins bien couverte.

Afin d'assurer à l'utilisateur une réception optimale du signal quelle que soit sa situation géographique, le terminal recherche en permanence, selon des procédés connus, les fréquences disponibles.

En effet, lorsque l'utilisateur se déplace, la qualité du signal reçu varie.

En s'éloignant de la station émettrice correspondant à la cellule dans laquelle le terminal se trouve, le signal devient de moins en moins fort. Le terminal balaie les différentes fréquences correspondant à la bande GSM jusqu'à ce qu'il détecte un signal de meilleure qualité que celui avec lequel il est en communication.

Une fois ce nouveau signal détecté, le terminal se connecte à l'aide de moyens connus à la nouvelle station et change ainsi de cellule en sélectionnant une cellule voisine de la précédente.

Dans le cas où aucun réseau n'est disponible, le terminal se met en veille et, à différents intervalles, balaie les fréquences sur une bande de fréquences relativement large, voire sur plusieurs bandes s'il s'agit d'un terminal multi-bandes jusqu'à ce qu'une nouvelle cellule soit sélectionnée.

Selon un procédé connu, le temps de veille du terminal, entre deux recherches consécutives, croît, par exemple, jusqu'à un maximum auquel il s'établit, et la recherche d'un réseau se poursuit ensuite à intervalles réguliers sur toutes les fréquences.

Or, cette recherche d'un réseau sollicite un grand nombre d'éléments dans le terminal induit une importante consommation d'énergie entraînant une baisse de l'autonomie du terminal.

En outre, le temps d'éveil, c'est-à-dire le temps que met le terminal à passer d'un état de veille à un état de réception d'un signal dès qu'un réseau disponible est détecté, est important du fait de la recherche d'un signal sur toutes les fréquences utilisables par le réseau.

Dans le cas où l'utilisateur entre dans un lieu où le réseau est indisponible tel qu'un parking ou un tunnel, la réception du signal s'interromps brusquement, le terminal ne pouvant capter le réseau.

Avec les procédés de détection de réseaux connus, le terminal va rechercher périodiquement sur toutes les fréquences un réseau disponible alors qu'il vient de quitter une fréquence déterminée d'un niveau de réception fort.

Cette recherche entraîne une consommation d'énergie supplémentaire inutile.

De plus, les procédés connus, en plus de la consommation excessive d'énergie, induisent des périodes de veille importantes et des temps d'éveil relativement long pendant lesquels l'utilisateur ne peut recevoir d'appel.

Ces longs temps d'éveil constituent également un inconvénient pour les opérateurs qui ne peuvent proposer, pendant ces périodes, leurs services.

Dans ce contexte, la présente invention a pour but de palier ces inconvénients en proposant un procédé permettant de diminuer la consommation d'énergie d'un terminal de radiocommunication lorsque aucun réseau n'est disponible tout en réduisant son temps d'éveil dès qu'un réseau est de nouveau disponible.

A cette fin, selon l'invention, le procédé de re-connexion à un réseau de radiocommunication d'un terminal se trouvant en mode veille en raison de l'indisponibilité temporaire du signal du réseau, comportant une étape de balayage périodique des fréquences dudit réseau de radiocommunication, est caractérisé en ce que le balayage est réalisé en au moins une séquence, chaque séquence étant associée à une liste prédéterminée de fréquences parmi l'ensemble des dites fréquences.

Avantageusement, la liste des fréquences associée à chaque séquence peut être variable ou non.

De préférence, le procédé comporte une étape de mémorisation des dernières fréquences disponibles avant la déconnexion avec le réseau afin que la première séquence de balayage balaie lesdites dernières fréquences disponibles.

Selon une première forme de réalisation, le procédé comporte une étape de mesure de l'intensité des dernières fréquences disponibles du signal afin que le balayage des fréquences ne soit partiel que si l'intensité des dernières fréquences disponibles dépasse une valeur seuil prédéterminée.

Selon une variante, le procédé comporte une étape de détermination du nombre de dernières fréquences disponibles avant la déconnexion avec le réseau ayant un signal d'intensité supérieure à une valeur seuil prédéterminée afin que le balayage des fréquences ne soit partiel que si ledit nombre des dernières fréquences disponibles ayant un signal d'intensité supérieure à une valeur seuil prédéterminée n'est lui-même supérieur à un nombre donné.

L'invention concerne en outre un terminal apte à être connecté à au moins un réseau de radiocommunication fonctionnant sur différentes fréquences comportant des moyens de balayage partiel des fréquences du réseau, ledit balayage partiel étant réalisé en au moins une séquence, chaque séquence étant associée à une liste prédéterminée de fréquences parmi l'ensemble des dites fréquences.

Selon une forme préférée de réalisation, le terminal comporte en outre des moyens lui permettant de sélectionner, selon la situation, entre un balayage partiel ou complet des différentes fréquences.

L'invention sera mieux comprise à la lumière de la description qui suit se rapportant à un exemple de réalisation illustratif mais en aucun cas limitatif, en référence aux dessins annexés dans lesquels :
- Les figures 1 et 2 sont des graphiques illustrant les variations de l'intensité du signal,
- La figure 3 est un ordinogramme montrant une forme de réalisation du procédé selon l'invention,
- La figure 4 est un ordinogramme d'une variante de réalisation du procédé selon l'invention.

Lorsque l'utilisateur d'un terminal de radiocommunication, tel que typiquement un téléphone portable, se déplace, la qualité du signal du réseau reçu par le terminal varie constamment.

Le dit terminal recherche alors une fréquence de fonctionnement optimale afin de se connecter à la station émettant à cette fréquence.

Selon la configuration géographique du lieu où se déplace l'utilisateur du terminal, les variations d'intensité du signal sont plus ou moins importantes.

Deux situations principales sont observables.

Dans le cas d'une zone où la couverture du réseau est relativement faible, comme en montagne ou lors d'un déplacement rapide sur route, les stations sont assez distantes entre elles.

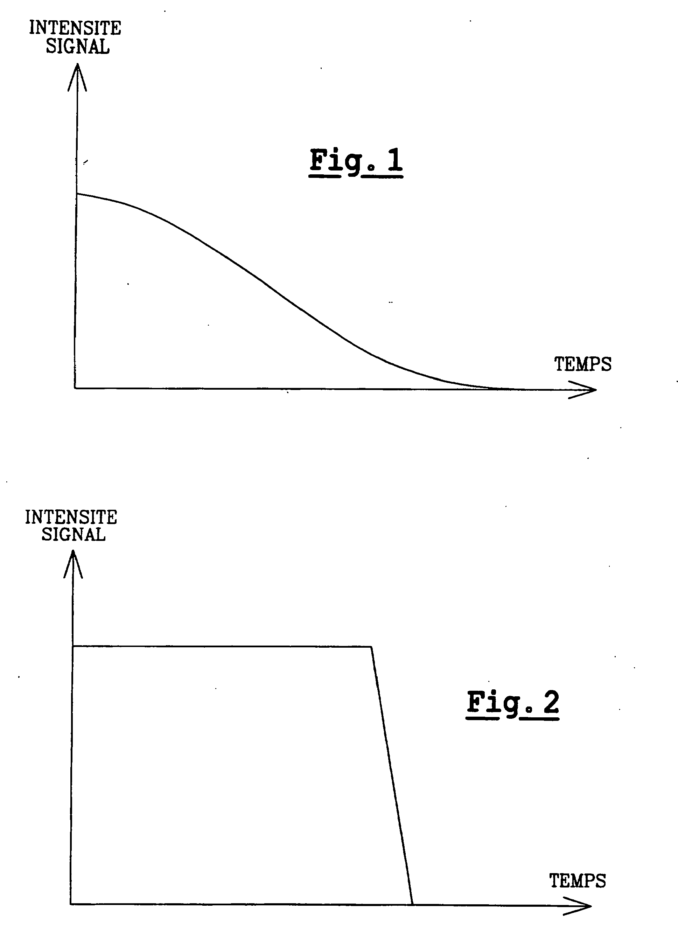

En s'éloignant de la station à laquelle le terminal est connecté, le signal reçu baisse progressivement en intensité comme le montre la figure 1 où l'axe des abscisses porte le temps au cours du déplacement et celui des ordonnées l'intensité du signal reçu.

L'intensité diminue ainsi jusqu'à atteindre une valeur trop faible pour assurer un fonctionnement satisfaisant du terminal. Alors, soit le terminal se connecte à une station voisine fournissant un signal plus fort dès que ce signal est détecté, soit aucun signal n'est disponible et le terminal entre en mode veille.

Dans le cas de la traversée d'un tunnel par exemple ou de l'entrée de l'utilisateur dans un parking, la chute de l'intensité du signal reçu est brutale et quasi-immédiate comme l'illustre la figure 2. A la sortie du tunnel, le terminal se re-connecte à la même station ou à une nouvelle dont le signal émis est sensiblement aussi fort, tandis qu'à la sortie d'un parking, le terminal retrouve un signal de même fréquence de fonctionnement qu'à l'entrée.

Pendant qu'il se trouve dans le tunnel ou dans un parking, aucun signal n'étant disponible, le terminal entre en veille.

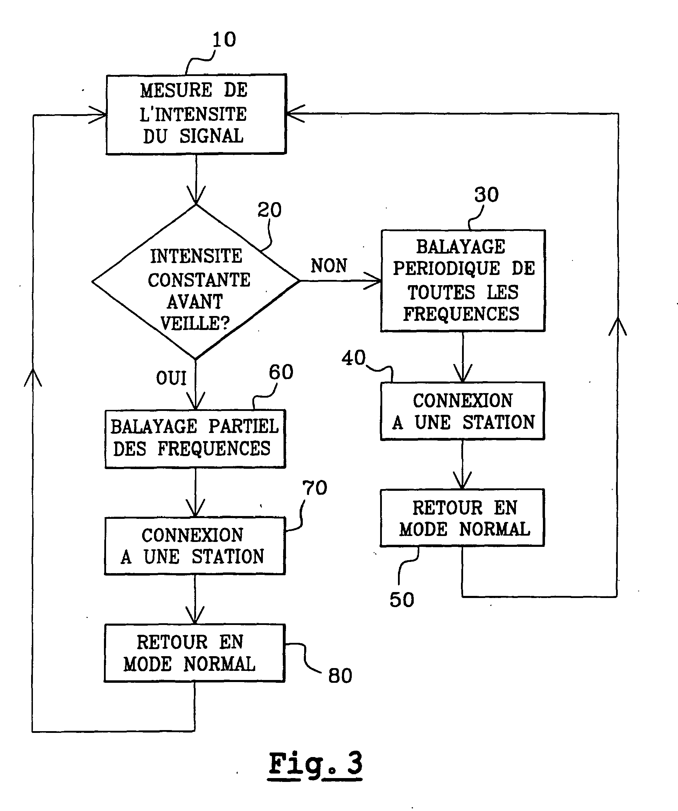

La figure 3 est un ordinogramme d'une forme particulière de réalisation du procédé selon l'invention permettant au terminal de rechercher un signal disponible en abaissant la consommation d'énergie et en limitant son temps d'éveil.

Selon cette forme préférée de réalisation, le terminal mesure en permanence l'intensité du signal qu'il reçoit, comme indiqué à l'étape (10). Cette mesure de l'intensité du signal est effectuée à l'aide de tous moyens connus.

Comme vu précédemment, lorsque aucun réseau n'est disponible, le terminal ne détecte aucun signal et entre alors en mode veille.

L'étape suivante (20) du procédé de la figure 3 est une étape de décision. Il s'agit de déterminer si, selon une forme particulière de réalisation, l'intensité du signal reçu par le terminal était constante pendant la période précédant le passage en mode veille dudit terminal.

A l'aide de tous moyens connus, une plage de variation peut être par exemple programmée dans le terminal :
- si la valeur de l'intensité du signal reçu reste, pendant ladite période précédant la veille, à l'intérieur de cette plage de variation, alors l'intensité est considérée comme étant constante. Cette situation correspond au cas où l'intensité du signal chute brutalement lors du passage en mode veille, tel qu'on l'a vu en liaison avec la figure 2.
- si au contraire, durant la période précédant la mise en veille du terminal, l'intensité du signal a décrue progressivement, on se trouve alors dans la situation illustrée à la figure 1.

Dans cette seconde hypothèse, le terminal effectue, de façon connue, un balayage périodique de toutes les fréquences du réseau, tel que l'indique l'étape (30) du procédé.

Entre chaque balayage complet de la gamme de fréquences, si le terminal ne détecte aucun signal, il retourne en mode veille.

Dés qu'un signal disponible est détecté, le terminal se connecte à la station émettant ledit signal (étape 40).

Dès lors qu'il est de nouveau connecté, le terminal est apte à recevoir et à émettre des données par l'intermédiaire de la station détectée, et peut donc revenir en mode normal (étape 50).

Si l'intensité du signal reçu par le terminal est constante durant la période précédant le passage en mode veille dudit terminal (étape 20), alors le terminal n'effectue qu'un balayage partiel des fréquences du réseau (étape 60).

En effet, nous nous trouvons dans la situation de la figure 2, c'est-à-dire que le terminal vient de quitter une zone couverte par un signal de niveau fort comme lors de l'entrée de l'utilisateur du terminal dans une salle, un parking, un tunnel...

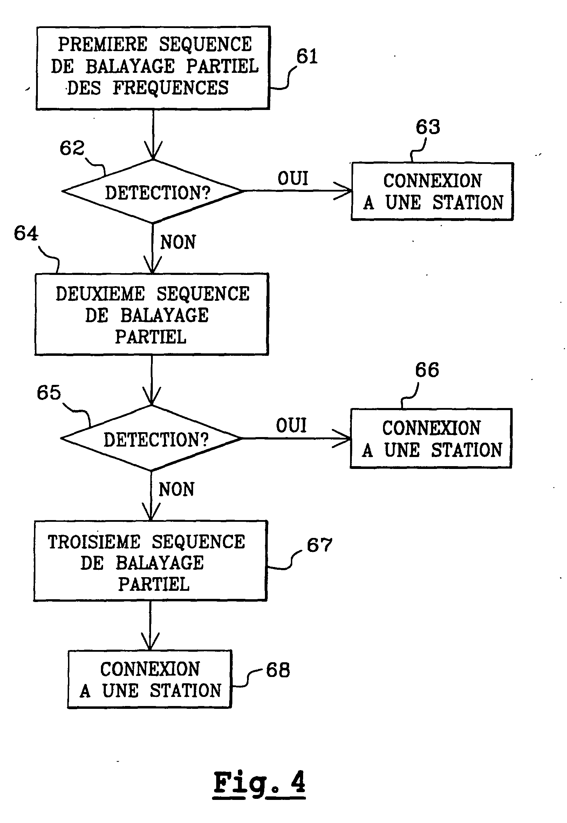

Afin d'éviter une consommation inutile d'énergie, le terminal ne balaie non pas la totalité des fréquences, mais uniquement une gamme relativement étroite de fréquences, selon un algorithme donné. Le terminal se "réveille" plus souvent que dans le cas des algorithmes connus, mais pour balayer une gamme de fréquences plus étroites. Cette étape 60 sera décrite plus en détails en liaison avec la figure 4.

Dès qu'un signal disponible possédant un niveau suffisant est détecté par le terminal, celui-ci se connecte, de façon connue, à la station émettant ledit signal (étape 70).

De nouveau apte à recevoir et à émettre des données, le terminal retourne en mode normal (étape 80).

Selon une variante de réalisation, durant l'étape de décision 20, le terminal détermine, à l'aide de moyens connus, le nombre de fréquences reçues avec une intensité supérieure à une intensité déterminée durant la période précédant la mise en veille.

Ainsi, un nombre de fréquences reçues avec une intensité suffisante durant la période précédant l'entrée en veille du terminal est faible (par exemple inférieur à une valeur programmée dans le terminal ou réduit à une seule fréquence), indique que le terminal, avant sa mise en veille, se trouvait dans une zone géographique où la couverture du réseau est faible.

Le terminal effectue alors un balayage périodique de toutes les fréquences du réseau comme décrit à l'étape 30.

Si au contraire, le nombre de fréquences reçues avec une intensité suffisante durant la période précédant l'entrée en veille du terminal est supérieur à un nombre donné minimum de fréquences programmé dans le terminal, alors la couverture de la zone où se trouvait ledit terminal était dense.

Cette situation correspond à celle où le terminal vient de quitter brutalement une zone dont la couverture est suffisante, comme illustré sur la figure 2.

Le terminal effectue alors, selon un algorithme donné, un balayage uniquément partiel des fréquences (étape 60), avant de se connecter à une station (étape 70) puis de revenir en mode normal (étape 80).

Ainsi, selon une forme préférée de réalisation, le terminal comporte des moyens de mesure et de mémorisation à tout instant de l'intensité et du nombre de signaux qu'il reçoit afin de déterminer, par exemple, si l'intensité de ces signaux est constante ou non juste avant d'entrer en mode veille.

La figure 4 est un ordinogramme détaillant l'étape 60 de la figure 3, qui représente une forme de réalisation de l'algorithme réalisant le balayage partiel des fréquences.

Le balayage partiel des fréquences par le terminal s'effectue selon différentes séquences. Durant chaque séquence, la gamme de fréquences balayée est différente afin d'optimiser la recherche d'un signal disponible.

Comme lors de l'étape 30, le terminal, entre chaque séquence, peut entrer en mode veille durant un temps plus ou moins long. Cependant, de manière avantageuse, ce temps de veille est inférieur à celui séparant deux séquences de balayage de toutes les fréquences telles que décrites à l'étape 30 de la figure 3.

Comme nous l'avons vu, le terminal se "réveille" plus souvent que lors de l'étape 30 mais effectue un balayage selon une gamme de fréquences plus étroite.

Selon la forme de réalisation du procédé représentée à la figure 4, la première séquence de balayage partielle peut consister à balayer, par exemple, les dernières fréquences disponibles mises en mémoire par le terminal juste avant son passage en état de veille (étape 61).

Ces dernières fréquences disponibles ont pu être utilisées par le terminal ou non avant son passage en mode veille.

En effet, dans le cas où l'utilisateur du terminal entre dans une salle ou un parking par exemple, la première fréquence disponible lors de sa sortie de la salle ou du parking correspond à la dernière fréquence disponible avant son entrée. Il s'avère donc inutile d'effectuer un balayage sur toute la gamme de fréquences, ce qui permet d'économiser de l'énergie et de réduire les différents temps de veille du terminal.

Par l'intermédiaire notamment des moyens de mémorisation, le terminal tente donc de détecter le signal qu'il utilisait et qu'il a quitté avant d'entrer en veille (étape 62).

Si ce signal est de nouveau disponible, alors le terminal se connecte à la station émettant ce signal (étape 63) et retourne en mode normal.

Durant ce mode normal, alors qu'il est déjà apte à recevoir et à émettre appels et données, le terminal peut éventuellement effectuer un nouveau balayage de la gamme complète de fréquences afin de sélectionner le signal doté du niveau le plus fort.

Dans le cas où le dernier signal capté avant d'entrer en veille n'est plus disponible, donc non détecté lors de l'étape 62, le terminal effectue une seconde séquence de balayage, en balayant cette fois-ci une autre gamme de fréquences (étape 64). La liste des fréquences associée à la séquence de l'étape 64 peut contenir certaines des fréquences balayées lors dé l'étape 61.

Si, dans ces gammes de fréquences, un signal est détecté, alors le terminal le sélectionne et se connecte à la station correspondante (étape 65 et 66).

Dans le cas contraire, le terminal effectue, selon une troisième séquence, un nouveau balayage (étape 67) en cherchant un signal disponible parmi une nouvelle gamme de fréquences, différente de la précédente.

Dès qu'un signal de niveau suffisant est détecté, le terminal se connecte à la station correspondante (étape 68) et retourne en mode normal.

Le nombre de séquences, et donc de fréquences balayées, peut se multiplier ainsi jusqu'à ce qu'un signal soit détecté afin que le terminal se connecte.

Il est entendu que les différentes séquences de balayage de fréquences décrites lors des étapes 61, 64 et 67 ne sont pas limitées à un type de liste unique.

On peut en effet prévoir différents algorithmes de balayage, où par exemple une première séquence balaie une liste de fréquences numérotées de 0 à 9 puis une seconde séquence de balayage celles numérotées de 10 à 19 et ainsi de suite.

Selon une autre forme de réalisation, la première séquence de balayage peut concerner la liste des fréquences numérotées 0, 10, 20, 30 etc, et la seconde les fréquences numérotées 1, 11, 21, 31 etc.

Quelle que soit la forme de réalisation choisie, le balayage partiel des fréquences est réalisé selon un algorithme prédéterminé et mis en mémoire dans le terminal.

A chaque séquence est associée une liste prédéterminée de fréquences que le terminal va balayer. Il est à noter que chaque liste de fréquences peut être invariable ou au contraire dynamique.

En effet, à une liste donnée peut correspondre certaines fréquences, toujours les mêmes, ou au contraire les différentes fréquences d'une même liste peuvent évoluer.

De plus, comme évoqué précédemment, des mêmes fréquences peuvent se retrouver dans plusieurs listes différentes, associées à différentes séquences de balayage.

Le choix des différentes fréquences composant une liste peut être aléatoire, dépendre de la carte radio du site où se trouve le terminal ou bien encore être adapté à certains paramètres tel que la nature de l'opérateur de radiocommunication par exemple.

En effet, il est intéressant qu'un terminal fonctionnant avec un opérateur précis ne balaie que les fréquences sur lesquelles émet ledit opérateur. Le nombre de fréquences à balayer étant réduit, le temps d'éveil du terminal se trouve diminué et, en conséquence, l'énergie consommée également réduite allouant une plus grande autonomie au terminal.

Ainsi, quelles que soient les séquences de balayage ou les listes de fréquences associées à ces séquences, le procédé décrit par la présente invention permet de significativement réduire la consommation d'énergie d'un terminal selon l'invention tout en réduisant également son temps d'éveil à la suite d'une indisponibilité du réseau.

## Revendications

1. Procédé de re-connexion à un réseau de radiocommunication d'un terminal se trouvant en mode veille en raison de l'indisponibilité temporaire du signal du réseau, comportant une étape de balayage périodique des fréquences dudit réseau de radiocommunication, ce balayage étant réalisé en au moins une séquence, chaque séquence étant associée à une liste prédéterminée de fréquences parmi l'ensemble des dites fréquences, **caractérisé en ce que**, pour prédéterminer une liste de fréquences, le procédé consiste à mesurer et à mémoriser à tout instant l'intensité des signaux reçus par le terminal, et à prendre les dernières fréquences disponibles avant la déconnexion avec le réseau, afin que la première séquence de balayage balaie lesdites dernières fréquences disponibles mises en mémoire.

2. Procédé selon la revendication 1, **caractérisé en ce que** la liste de fréquences associée à chaque séquence est invariable.

3. Procédé selon la revendication 1, **caractérisé en ce que** la liste de fréquences associée à chaque séquence est variable.

4. Procédé selon la revendication précédente, **caractérisé en ce qu'**il comporte une étape de mesure de l'intensité des dernières fréquences disponibles du signal avant la déconnexion avec le réseau.

5. Procédé selon la revendication 4, **caractérisé en ce que** le balayage des fréquences n'est partiel que si l'intensité des dernières fréquences disponibles dépasse une valeur seuil prédéterminée.

6. Procédé selon la revendication 4, **caractérisé en ce qu'**il comporte une étape de détermination du nombre de dernières fréquences disponibles avant la déconnexion avec le réseau ayant un signal d'intensité supérieure à une valeur seuil prédéterminée.

7. Procédé selon la revendication précédente, **caractérisé en ce que** le balayage des fréquences n'est partiel que si ledit nombre des dernières fréquences disponibles ayant un signal d'intensité supérieure à une valeur seuil prédéterminée est lui-même supérieur à un nombre donné.

8. Terminal apte à être connecté à au moins un réseau de radiocommunication fonctionnant sur différentes fréquences, comportant des moyens de balayage partiel des fréquences du réseau, ledit balayage partiel étant réalisé en au moins une séquence, chaque séquence étant associée à une liste prédéterminée de fréquences parmi l'ensemble des dites fréquences ; **caractérisé en ce qu'**il comporte des moyens pour prédéterminer une liste de fréquences, comportant des moyens pour mesurer et mémoriser à tout instant l'intensité des signaux reçus par le terminal, et prendre les dernières fréquences disponibles avant la déconnexion avec le réseau afin que la première séquence de balayage balaie lesdites dernières fréquences disponibles mises en mémoire.

9. Terminal selon la revendication 8, **caractérisé en ce qu'**il comporte en outre des moyens lui permettant de sélectionner un balayage soit partiel, soit complet, des différentes fréquences.

## Claims

1. A method for re-connecting to a terminal's radio communication network in idle mode to due the temporary unavailability of the network's signal, comprising a step of periodically scanning the frequencies of said radio communication network, this scanning being carried out in at least one sequence, each sequence being associated with a predetermined list of frequencies among the set of said frequencies, **characterized in that**, in order to predetermine a list of frequencies saved in memory, the method consists of measuring and saving at all times the intensity of the signals received by the terminal, and of taking the last available frequencies before the disconnection with the network, so that the first scanning sequence scans said last available frequencies saved in memory.

2. A method according to claim 1, **characterized in that** the list of frequencies associated with each sequence is invariable.

3. A method according to claim 1, **characterized in that** the list of frequencies associated with each sequence is variable.

4. A method according to the preceding claim, **characterized in that** it comprises a step of measuring the intensity of the last available frequencies of the signal before the disconnection with the network.

5. A method according to claim 4, **characterized in that** the scanning of the frequencies is only partial if the intensity of the last available frequencies exceeds a predetermined threshold value.

6. A method according to claim 4, **characterized in that** it comprises a step of determining the number of last available frequencies before the disconnection with the network having an intensity signal greater than a predetermined threshold value.

7. A method according to the preceding claim, **characterized in that** the scanning of the frequencies is only partial if said number of last available frequencies having an intensity signal greater than a predetermined threshold value is itself greater than a given number.

8. A terminal capable of being connected to at least one radio communication network operating on different frequencies, comprising means of partially scanning the network's frequencies, said partial scanning being carried out in at least one sequence, each sequence being associated with a predetermined list of frequencies among the set of said frequencies, **characterized in that** it comprises means for predetermining a list of frequencies, comprising means for measuring and saving at all times the intensity of the signals received by the terminal, and for taking the last available frequencies before the disconnection with the network, so that the first scanning sequence scans said last available frequencies saved in memory.

9. A terminal according to claim 8, **characterized in that** it further comprises means enabling it to select either a full or partial scan of different frequencies.

## Patentansprüche

1. Verfahren zur Wiederverbindung eines Endgeräts, welches sich aufgrund einer vorübergehenden Nichtverfügbarkeit des Netzwerksignals im Standby-Modus befindet, mit einem Funkkommunikationsnetzwerk, umfassend einen Schritt des periodischen Abtastens der Frequenzen des besagten Funkkommunikationsnetzwerks, wobei das besagte Abtasten in mindestens einer Sequenz erfolgt, wobei jede Sequenz mit einer vorbestimmten Liste von Frequenzen aus der Menge der besagten Frequenzen assoziiert ist, **dadurch gekennzeichnet, dass**, um eine Liste von Frequenzen vorzubestimmen, das Verfahren darin besteht, jederzeit die Intensität der am Endgerät empfangenen Signale zu messen und zu speichern und die letzten, vor der Trennung vom Netzwerk verfügbaren Frequenzen zu verwenden, so dass die erste Abtastsequenz die besagten letzten verfügbaren und gespeicherten Frequenzen abtastet.

2. Verfahren nach Anspruch 1, **dadurch gekennzeichnet, dass** die mit einer jeden Sequenz assoziierte Liste von Frequenzen invariabel ist.

3. Verfahren nach Anspruch 1, **dadurch gekennzeichnet, dass** die mit einer jeden Sequenz assoziierte Liste von Frequenzen variabel ist.

4. Verfahren nach einem der vorstehenden Ansprüche, **dadurch gekennzeichnet, dass** es einen Schritt des Messens der Intensität der letzten verfügbaren Frequenzen des Signals vor der Trennung vom Netzwerk umfasst.

5. Verfahren nach Anspruch 4, **dadurch gekennzeichnet, dass** das Abtasten der Frequenzen nur dann eine Teilabtastung ist, wenn die Intensität der letzten verfügbaren Frequenzen einen vorgegebenen Grenzwert überschreitet.

6. Verfahren nach Anspruch 4, **dadurch gekennzeichnet, dass** es einen Schritt des Ermittelns der Anzahl der letzten vor der Trennung vom Netzwerk verfügbaren Frequenzen, deren Signalintensität einen vorgegebenen Grenzwert überschreitet, umfasst.

7. Verfahren nach dem vorstehenden Anspruch, **dadurch gekennzeichnet, dass** die Frequenzabtastung nur dann eine Teilabtastung ist, wenn die Anzahl der letzten verfügbaren Frequenzen, deren Signalintensität einen vorgegebenen Grenzwert überschreitet, selbst eine gegebene Anzahl überschreitet.

8. Endgerät, welches für den Anschluss an mindestens ein auf verschiedenen Frequenzen arbeitendes Funkkommunikationsnetzwerk, umfassend Mittel zum Teilabtasten der Netzwerkfrequenzen, wobei die besagte Teilabtastung in mindestens einer Sequenz erfolgt, wobei jede Frequenz mit einer vorbestimmten Liste aus der Menge der besagten Frequenzen assoziiert ist, **dadurch gekennzeichnet, dass** es Mittel umfasst, um eine Liste von Frequenzen vorzubestimmen, und Mittel um jederzeit die Intensität der am Endgerät empfangenen Signale zu messen und zu speichern und die letzten, vor der Trennung vom Netzwerk verfügbaren Frequenzen zu verwenden, so dass die erste Abtastsequenz die besagten letzten verfügbaren und gespeicherten Frequenzen abtastet.

9. Endgerät nach Anspruch 8, **dadurch gekennzeichnet, dass** es weiterhin Mittel umfasst, welche es ihm ermöglicht, entweder eine Teil- oder eine Komplettabtastung der verschiedenen Frequenzen zu wählen.
